# EUROPÄISCHE PATENTSCHRIFT

(11) **EP 3 436 711 B1**
(45) Veröffentlichungstag und Bekanntmachung des Hinweises auf die Patenterteilung: **08.09.2021**
(21) Anmeldenummer: 17712037.5
(22) Anmeldetag: 01.03.2017
(51) Int. Cl.: F16B 41/00

(54) **VERBINDUNGSANORDNUNG**
CONNECTION ASSEMBLY
SYSTÈME DE LIAISON

(30) Priorität: 29.03.2016 DE 102016205155
(43) Veröffentlichungstag der Anmeldung: 06.02.2019
(73) Patentinhaber: Audi AG, 85045 Ingolstadt (DE)
(72) Erfinder: EICHHORN, Alexander, 75031 Eppingen (DE); MAISCH, Ralf, 74232 Abstatt (DE); FEES, Heiner, 74321 Bietigheim-Bissingen (DE)
(86) Internationale Anmeldenummer: PCT/EP2017/054774
(87) Internationale Veröffentlichungsnummer: WO 2017/167531

(56) Entgegenhaltungen:
- EP-A2- 1 881 211
- WO-A1-2015/140916
- DE-U1- 8 701 553
- DE-U1-202007 014 325
- US-A1- 2009 142 158
- US-B1- 6 464 438

## Beschreibung

Die Erfindung betrifft eine Verbindungsanordnung und ein Verfahren zum Befestigen einer Verbindungsanordnung an mindestens einer Vorrichtung.

Zwei Vorrichtungen, die bspw. als Batterien ausgebildet sind, können über eine als Modulverbinder ausgebildete Verbindungsanordnung miteinander verbunden werden, wobei die beiden Vorrichtungen üblicherweise mechanisch und/oder elektrisch miteinander verbunden werden. Hierzu wird die Verbindungsanordnung an den beiden Vorrichtungen befestigt, wobei eine derartige Montage unter geringem Aufwand durchgeführt werden sollte. Allerdings ist hier auch zu beachten, dass die Vorrichtungen bei der Montage nicht beschädigt werden.

Die Druckschrift DE 87 01 553 U1 zeigt einen Verbinder zum Anschluss von Sprossen, Streben und dergleichen an Stützen, Pfosten und dergleichen mit einem in einer Hammerkopfnut einer Stütze arretierbaren Klemmenfuß und einem den Verbinder ortsfest festlegenden, eine Befestigungsschraube aufnehmenden Stütznocken für die Halterung einer Sprosse oder Strebe.

Eine Befestigungsvorrichtung mit einer Schraube, die eine Hülse axial durchsetzt und mit dieser unverlierbar verbunden ist, ist aus der Druckschrift EP 1 881 211 A2 bekannt.

Eine aus der Druckschrift DE 20 2007 014 325 U1 bekannte Montageanordnung umfasst eine in ein Montageteil einsetzbare Hülse, einen elastischen Ring und eine einen Kopf und einen Schaft aufweisende Schraube.

Die Druckschrift US 2009/0142158 A1 beschreibt eine Verriegelungsanordnung mit einem Verriegelungselement mit einem Verriegelungsabschnitt und einer Hülse, die darin ein Durchgangsloch zum Halten und Führen des Verriegelungselements definiert.

Eine unverlierbare Befestigungsvorrichtung zum Zusammenhalten von zwei Elementen ist aus der Druckschrift US 6 464 438 B1 bekannt. Diese Befestigungsvorrichtung besteht aus einem Gehäuse, das sicher an dem ersten Element befestigt werden kann.

Eine in der Druckschrift WO 2015/140916 A1 beschriebene Gewindestruktur ist mit einem zu befestigenden Teil, der ein Durchgangsloch aufweist, einem fahrzeugseitigem Gewindeloch und einer Schraube zum Befestigen des zu befestigenden Teils an einer dekorativen Platte versehen.

Vor diesem Hintergrund werden eine Verbindungsanordnung und ein Verfahren mit den Merkmalen der unabhängigen Patentansprüche vorgestellt. Ausgestaltungen der Verbindungsanordnung und des Verfahrens gehen aus den abhängigen Patentansprüchen und der Beschreibung hervor.

Die erfindungsgemäße Verbindungsanordnung, die bspw. als Modulverbinder zu bezeichnen ist, umfasst mehrere Aufnahmemodule, wobei jedes Aufnahmemodul zur Aufnahme von jeweils einem Befestigungselement ausgebildet ist. Jedes Aufnahmemodul umfasst eine Kammer zur Aufnahme eines jeweiligen Befestigungselements. Die Kammer ist von einer Innenwand begrenzt und weist eine erste Öffnung sowie eine zweite Öffnung auf, wobei die beiden Öffnungen einen Durchgangskanal innerhalb der Kammer begrenzen. Die Kammer ist von einer Innenwand umschlossen, die mindestens ein Verrastungsmodul aufweist, an dem das jeweilige Befestigungselement innerhalb der Kammer zumindest vorübergehend und/oder temporär zu verrasten ist. Außerdem ist das verrastete jeweilige Befestigungselement vollständig innerhalb der Kammer anzuordnen und/oder aufzunehmen. Die Aufnahmemodule der Verbindungsanordnung sind aus Metall und elektrisch leitfähig. Das jeweilige Befestigungselement ist aus Metall und elektrisch leitfähig. An der Verbindungsanordnung ist mindestens eine als Batterie ausgebildete Vorrichtung zu befestigen.

Jedes Aufnahmemodul ist dazu ausgebildet, jeweils ein Befestigungselement aufzunehmen, das einen Stift und einen Kopf aufweist, die miteinander verbunden sind, wobei der Durchgangskanal in Längsrichtung, d. h. in Einführrichtung des jeweiligen Befestigungselements in das Aufnahmemodul, länger als der Kopf und Stift, die miteinander verbunden sind, und somit länger als das jeweilige Befestigungselement ist. Dabei ist der Stift länger als der Kopf, wohingegen ein maximales Außenmaß des Kopfs größer als ein maximales Außenmaß des Stifts ist. Im Falle, dass der Kopf im Querschnitt, d. h. senkrecht zur Einführrichtung des Kopfs in das Aufnahmemodul eine kreisrunde Form aufweist, entspricht das maximale Außenmaß einem maximalen Durchmesser des kreisförmigen Querschnitts des Kopfs. Gleiches gilt bei dem Stift, falls dieser im Querschnitt eine kreisrunde Form aufweist. Auch hier entspricht dann das maximale Außenmaß einem maximalen Durchmesser des kreisrunden Querschnitts des Stifts. Üblicherweise weisen der Stift und der Kopf eine gemeinsame Rotationsachse auf. In Ausgestaltung ist jedes Aufnahmemodul dazu ausgebildet, ein jeweiliges Befestigungselement aufzunehmen, das als Schraube ausgebildet ist, deren Stift ein Gewinde aufweist.

In der Regel ist ein maximales Innenmaß, bspw. im Falle einer kreisrunden Querschnittsform relativ zur Einführrichtung ein maximaler Durchmesser, der Innenwand der Kammer größer als das maximale Außenmaß des Kopfs des jeweiligen Befestigungselements. Das mindestens eine Verrastungsmodul begrenzt und/oder umschließt einen Bereich innerhalb der Kammer, wobei ein minimales Innenmaß, bspw. ein minimaler Durchmesser, des von dem mindestens einen Verrastungsmodul umschlossenen und/oder begrenzten Bereichs der Innenwand der Kammer kleiner als das maximale Außenmaß des Kopfs und größer als das maximale Außenmaß des Stifts ist.

Weiterhin ist es möglich, dass die Innenwand der Kammer jedes Aufnahmemoduls relativ zur Einführrichtung des jeweiligen Befestigungselements rotationssymmetrisch, bspw. zylinderförmig, ausgebildet ist, wobei das mindestens eine Verrastungsmodul zwei Wulste aufweist, die an der Innenwand zueinander axial, d. h. entlang der Längs- bzw. Rotationsachse versetzt angeordnet sind. Dabei sind die beiden Wulste als Verjüngungen und somit als Komponenten der Innenwand der Kammer ausgebildet. Ein minimales Innenmaß, bspw. im Falle einer kreisrunden Form der Wulste ein minimaler Durchmesser, jeweils einer dieser Wulste ist kleiner als das maximale Außenmaß des Kopfs des jeweiligen Befestigungselements. Ein zwischen den beiden Wulsten angeordneter Bereich der Innenwand weist ein minimales Innenmaß, bspw. einen minimalen Durchmesser, auf, das größer als das maximale Außenmaß des Kopfs ist. Dabei ist dieser Bereich der Innenwand bspw. zylindersymmetrisch oder als kreisrunde Sicke zwischen den beiden Wulsten ausgebildet. Eine axiale Länge des Bereichs zwischen den beiden Wulsten ist größer als eine Höhe bzw. axiale Länge des Kopfs, wodurch der Kopf zwischen beiden Wulsten anzuordnen, d. h. einzuklemmen und/oder zu verrasten ist.

Außerdem ist ein Innenmaß, bspw. im Falle einer kreisrunden Form der jeweiligen Öffnungen ein Durchmesser, einer der beiden Öffnungen des Durchgangskanals, bspw. einer ersten Öffnung, größer als das Außenmaß des Kopfs und ein Innenmaß, bspw. ein Durchmesser, der anderen der beiden Öffnungen, bspw. einer zweiten Öffnung, des Durchgangskanals kleiner als das Außenmaß des Kopfs. Das jeweilige Innenmaß der Öffnungen ist stets größer als das maximale Außenmaß des Stifts. Somit ist es möglich, dass der Stift durch die zweite Öffnung zu führen ist. Dagegen ist der Kopf innerhalb der Kammer auf der zweiten Öffnung aufzulegen und/oder anzuordnen.

In Ausgestaltung ist an der zweiten der beiden Öffnungen ein Anlageelement angeordnet, das ein Loch mit einem Innenmaß, bspw. im Falle einer kreisrunden Form des Lochs einem Durchmesser, aufweist, das kleiner als das Außenmaß des Kopfs ist und die zweite Öffnung begrenzt.

Die Verbindungsanordnung ist an mindestens einer als Batterie ausgebildeten Vorrichtung zu befestigen. In der Regel sind zwei Batterien mit der Verbindungsanordnung bzw. dem Modulverbinder mechanisch und/oder elektrisch leitfähig zu verbinden. Dabei ist es möglich, dass einzelne Aufnahmemodule und/oder damit verbundene Anlageelemente aus Metall und elektrisch leitfähig sind. Weiterhin sind zumindest zwei Aufnahmemodule miteinander elektrisch leitfähig verbunden. Weiterhin ist vorgesehen, dass auch die Befestigungselemente aus Metall und elektrisch leitfähig sind. Dabei ist es möglich, dass zwei Aufnahmemodule über einen Verbindungskörper miteinander verbunden sind. Die Verbindungsanordnung weist in einer Ausführungsform eine Isolierung auf, die an einer Außenwand der Verbindungsanordnung angeordnet ist.

In Ausgestaltung sind bspw. zwei als Batterien ausgebildete Vorrichtungen über die Verbindungsanordnung miteinander zu verbinden. Hierzu wird ein erstes Aufnahmemodul, in dessen Kammer ein erstes Befestigungselement verrastet und vollständig aufgenommen ist, einer ersten Vorrichtung zugeordnet, wobei die zweite Öffnung der Kammer des ersten Aufnahmemoduls an bzw. auf einer Öffnung der ersten Vorrichtung angeordnet wird. Ein zweites Aufnahmemodul, in dessen Kammer ein zweites Befestigungselement verrastet und vollständig aufgenommen ist, wird einer zweiten Vorrichtung zugeordnet, wobei die zweite Öffnung der Kammer des zweiten Aufnahmemoduls an bzw. auf einer Öffnung der zweiten Vorrichtung angeordnet wird.

Danach wird der Kopf des ersten Befestigungselements und somit auch das erste Befestigungselement über die erste Öffnung der Kammer des ersten Aufnahmemoduls in Richtung der zweiten Öffnung gedrückt, wobei der zunächst mit dem Verrastungsmodul verrastete Kopf entrastet und somit das erste Befestigungselement freigeben wird. Danach wird der Stift des ersten Befestigungselements durch die zweite Öffnung des ersten Aufnahmemoduls in die Öffnung der ersten Vorrichtung gedrückt und darin bspw. durch Verschrauben befestigt. Allerdings liegt der Kopf auf der zweiten Öffnung des ersten Aufnahmemoduls, die bspw. durch das Loch des Anlageelements begrenzt ist, auf und verbleibt in der Kammer. Entsprechend wird der Kopf des zweiten Befestigungselements und somit auch das zweite Befestigungselement über die erste Öffnung der Kammer des zweiten Aufnahmemoduls in Richtung der zweiten Öffnung gedrückt, wobei der zunächst mit dem Verrastungsmodul verrastete Kopf entrastet und somit das zweite Befestigungselement freigeben wird. Danach wird der Stift des zweiten Befestigungselements durch die zweite Öffnung des zweiten Aufnahmemoduls in die Öffnung der zweiten Vorrichtung gedrückt und darin bspw. durch Verschrauben befestigt. Allerdings liegt der Kopf auf der zweiten Öffnung des zweiten Aufnahmemoduls, die bspw. durch das Loch des Anlageelements begrenzt ist, auf und verbleibt in der Kammer.

Dabei ist die erste Vorrichtung über das erste Befestigungselement mit dem ersten Aufnahmemodul und die zweite Vorrichtung über das zweite Befestigungselement mit dem zweiten Aufnahmemodul zu verbinden. Da die beiden Aufnahmemodule durch einen Verbindungskörper miteinander verbunden sind, sind die beiden Vorrichtungen, bspw. Batterien, über Komponenten der Verbindungsanordnung, d. h. die beiden Befestigungselemente, die beiden Aufnahmemodule und den Verbindungskörper miteinander mechanisch und elektrisch leitfähig zu verbinden.

In möglicher Ausgestaltung umfasst die Verbindungsanordnung mindestens eine Kammer, die von der Innenwand umschlossen ist und die erste Öffnung sowie die zweite Öffnung aufweist, wobei die mindestens eine Kammer zum Aufnehmen einer Schraube als Befestigungselement, die den Kopf und den Stift bzw. Bolzen aufweist, ausgebildet ist, wobei die Wand an einer Innenseite zwei Wulste aufweist, die eine kreisrunde Nut an der Innenwand umschließen bzw. axial begrenzen, wobei das Innenmaß, bspw. ein Innendurchmesser bzw. minimaler Durchmesser, jeweils einer der beiden Wulste geringer als das Außenmaß, bspw. ein Außendurchmesser bzw. maximaler Durchmesser, des Kopfs ist, wobei ein Innendurchmesser eines Nutgrunds bzw. Nutbodens der Nut mindestens so groß wie das Außenmaß des Kopfs ist, wobei mindestens eine der beiden Wulste zu einer der beiden Öffnungen, bspw. der zweiten Öffnung, einen Abstand aufweist, der größer als eine Länge des Stifts ist, wobei der Kopf der Schraube zwischen beiden Wulsten einzuklemmen und die Schraube vollständig innerhalb der Kammer aufzunehmen ist.

Bei dem erfindungsgemäßen Verfahren zum Befestigen einer Verbindungsanordnung an mindestens einer Vorrichtung wird eine Verbindungsanordnung verwendet, die mehrere Aufnahmemodule aufweist, wobei jedes Aufnahmemodul zur Aufnahme von jeweils einem Befestigungselement ausgebildet ist, wobei jedes Aufnahmemodul eine Kammer zur Aufnahme von jeweils einem Befestigungselement umfasst, die von einer Innenwand begrenzt ist und eine erste Öffnung sowie eine zweite Öffnung aufweist, wobei die beiden Öffnungen einen Durchgangskanal innerhalb der Kammer begrenzen. Die Kammer ist von einer Innenwand umschlossen und weist mindestens ein Verrastungsmodul auf. Das jeweilige Befestigungselement wird innerhalb der Kammer zumindest vorübergehend und/oder temporär verrastet, wobei das darin verrastete jeweilige Befestigungselement vollständig innerhalb der Kammer angeordnet und/oder aufgenommen wird. Die Verbindungsanordnung wird an der mindestens einen Vorrichtung angeordnet, wobei das jeweilige Befestigungselement aus der Kammer des jeweiligen Aufnahmemoduls gedrückt und an der mindestens einen Vorrichtung angeordnet und/oder mit der mindestens einen Vorrichtung verbunden wird. Die Aufnahmemodule der Verbindungsanordnung sind aus Metall und elektrisch leitfähig. Das jeweilige Befestigungselement ist aus Metall und elektrisch leitfähig. An der Verbindungsanordnung ist mindestens eine als Batterie ausgebildete Vorrichtung zu befestigen.

Weiterhin wird die Verbindungsanordnung über mindestens ein Befestigungselement an der mindestens einen Vorrichtung befestigt.

In Ausgestaltung wird jeweils ein Befestigungselement verwendet, das einen Kopf und einen Stift aufweist, wobei das maximale Außenmaß des Kopfs größer als das maximale Außenmaß des Stifts ist. Die erste Öffnung des Durchgangskanals weist ein Innenmaß auf, das größer als das Außenmaß des Kopfs ist. Die zweite Öffnung des Durchgangskanals weist ein Innenmaß auf, das kleiner als das Außenmaß des Kopfs ist. Hierbei ist in Ausgestaltung an der zweiten Öffnung ein Anlageelement mit einem Loch angeordnet, das die zweite Öffnung begrenzt und/oder bildet. Das jeweilige Befestigungselement wird mit dem Stift voran in die erste Öffnung eingeführt, wobei der Kopf durch die erste Öffnung hindurch in der Kammer angeordnet und über das mindestens eine Verrastungsmodul darin verrastet wird. Die Verbindungsanordnung wird an der mindestens einen Vorrichtung angeordnet, wobei der Kopf bspw. von einem Werkzeug durch die erste Öffnung hindurch in Richtung der zweiten Öffnung geschoben und von dem mindestens einen Verrastungsmodul entrastet wird, wobei der Stift durch die zweite Öffnung hindurch mit der mindestens einen Vorrichtung verbunden wird. Dabei gerät der Kopf an der zweiten Öffnung, üblicherweise dem Loch des Auflageelements, innerhalb der Kammer in Anlage und verbleibt in der Kammer, wobei die Verbindungsanordnung über das jeweilige Befestigungselement an der mindestens einen Vorrichtung befestigt wird.

Die Verbindungsanordnung, die auch als Modulverbinder ausgebildet sein kann, ist in Ausgestaltung als Busbarisolation für mehrere als Batterien ausgebildete Vorrichtungen vorgesehen. Dabei ist die Verbindungsanordnung an den Vorrichtungen in der Regel über mehrere Befestigungselemente zu befestigen. Hierbei werden Stifte der Befestigungselemente an den Vorrichtungen verankert. Jede Vorrichtung weist hierzu mindestens eine Öffnung zur Aufnahme eines Stifts eines Befestigungselements auf. Falls ein Befestigungselement einen Stift mit einem Gewinde aufweist, ist dieses über das Gewinde in ein Gegengewinde einer derartigen Öffnung einzuschrauben, wobei eine derartige Befestigung einer Verbindungsanordnung an einer Vorrichtung auch als Schraubenfixierung bezeichnet wird. Weiterhin sind zwei derartige Vorrichtungen über eine Verbindungsanordnung miteinander zu verbinden.

Falls mit der Verbindungsanordnung im Fall von Batterien neben einer mechanischen auch eine elektrische Verbindung bereitzustellen ist, ist die Verbindungsanordnung auch als Stromverbinder zu bezeichnen. Dabei umfasst die Verbindungsanordnung mehrere Aufnahmemodule mit entsprechend mehreren Schrauben. Hierbei sind die Verbindungsanordnung und die Schrauben isoliert und berührgeschützt ausgebildet. Dies wird bspw. an Schraubstellen, die durch die Öffnungen einer jeweiligen Kammer zu erreichen sind, durch Aufbringen einer Isolation und/oder durch eine zusätzliche Isolierung einer Abdeckung ermöglicht. Hierbei ist es auch möglich, zur Verbindung von zwei Vorrichtungen über die Verbindungsanordnung Befestigungselemente in den Aufnahmemodulen verliersicher anzuordnen. Somit wird vermieden, dass das bspw. als Schraube ausgebildete Verbindungselement aus dem jeweils hierfür vorgesehenen Aufnahmemodul und somit von Kontaktflächen der Verbindungsanordnung hervorragt.

Bei der Montage wird die Verbindungsanordnung senkrecht auf einer Terminalfläche der Vorrichtung angeordnet und die Schraube als Befestigungselement in eine hierfür vorgesehene Bohrung, bspw. Gewindebohrung, an der Vorrichtung eingeführt, wobei das Befestigungselement entlang des Durchgangskanals von der ersten Öffnung in Richtung der zweiten Öffnung bewegt wird. Ein elektrischer Kontakt zwischen der Vorrichtung und der Verbindungsanordnung wird in der Regel über die Schraube bereitgestellt. Dadurch, dass das üblicherweise als Schraube ausgebildete Befestigungselement in dem jeweils hierfür vorgesehenen Aufnahmemodul vollständig aufgenommen ist, wird verhindert, dass eine bspw. beschichtete Anlagefläche der Vorrichtung beschädigt wird, wenn die Verbindungsanordnung auf der Vorrichtung angeordnet wird.

In der Regel ist es möglich, jeweils ein Befestigungselement in jeweils ein Aufnahmemodul aufgrund der vorgesehenen temporären Verrastung innerhalb einer Kammer des jeweiligen Aufnahmemoduls vollständig und verliersicher aufzunehmen, wobei das in der Kammer angeordnete Befestigungselement vollständig von der Kammer umschlossen ist.

Eine Positionierung, üblicherweise Verrastung, des Befestigungselements in der Kammer eines jeweiligen Aufnahmemoduls ist formschlüssig oder kraftschlüssig.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung schematisch und ausführlich beschrieben.

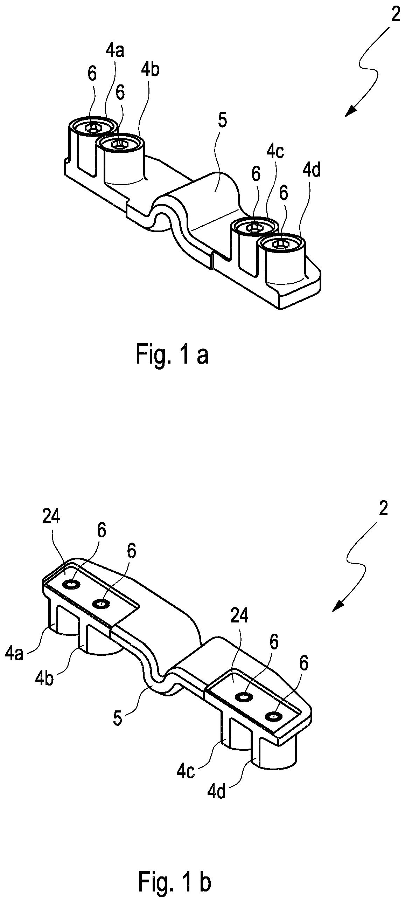

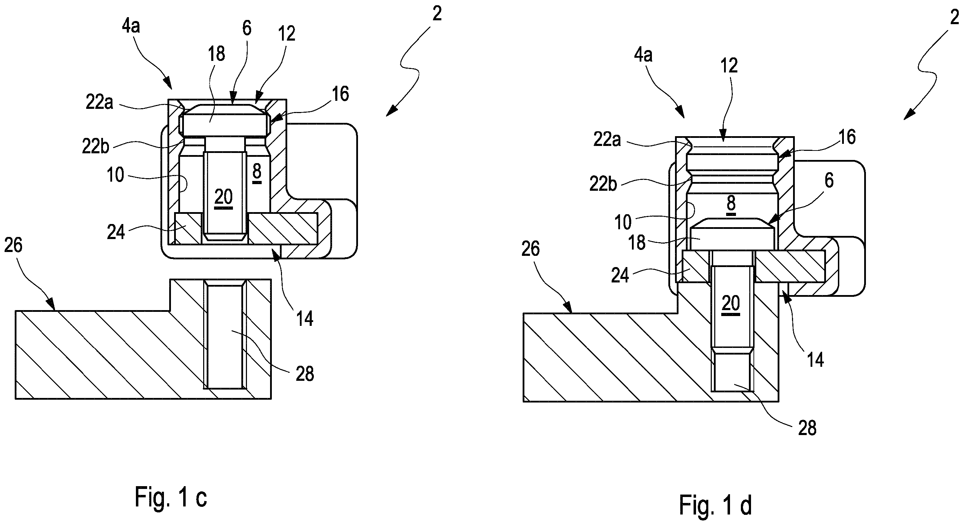

Figur 1 zeigt in schematischer Darstellung eine Ausführungsform der erfindungsgemäßen Verbindungsanordnung bei einer Montage einer Vorrichtung aus unterschiedlichen Perspektiven.

Die Ausführungsform der erfindungsgemäßen Verbindungsanordnung 2 ist in Figur 1a von oben und in Figur 1b von unten schematisch dargestellt. Diese Verbindungsanordnung 2 umfasst hier vier Aufnahmemodule 4a, 4b, 4c, 4d, wobei jedes Aufnahmemodul 4a, 4b, 4c, 4d zur Aufnahme eines hier als Schraube ausgebildeten Befestigungselements 6 ausgebildet ist. Dabei sind hier jeweils zwei Aufnahmemodule 4a, 4b, 4c, 4d direkt nebeneinander angeordnet und bilden jeweils ein Paar Aufnahmemodule 4a, 4b und 4c, 4d. Die beiden Paare Aufnahmemodule 4a, 4b und 4c, 4d sind über einen Verbindungskörper 5 der Verbindungsanordnung 2 miteinander verbunden.

Der Verbindungskörper 5 umfasst hier drei Abschnitte, nämlich zwei äußere Abschnitte, zwischen denen ein innerer bzw. mittlerer Abschnitt angeordnet ist. Die beiden äußeren Abschnitte sind hier quaderförmig ausgebildet und zueinander parallel sowie zueinander fluchtend in derselben Ebene angeordnet, wobei jeweils ein äußerer Abschnitt ein Paar Aufnahmemodule 4a, 4b bzw. 4c, 4d aufweist. Der dazwischen angeordnete innere Abschnitt ist gebogen und im Profil halbkreisförmig ausgebildet, wobei der innere Abschnitt eine halbkreisförmige Fläche umschließt. Demnach ist der Verbindungskörper 5 im Bereich des inneren Abschnitts konvex gewölbt.

Dabei zeigen die Figuren 1c und 1d ein erstes Aufnahmemodul 4a der Verbindungsanordnung 2 in Schnittdarstellung. Dabei umfasst das Aufnahmemodul 4a eine Kammer 8 mit einer hier rotationssymmetrischen Innenwand 10, einer ersten Öffnung 12 und einer zweiten Öffnung 14. An der Innenwand 10 befindet sich ein Verrastungsmodul 16 zur vorübergehenden Aufnahme des Befestigungselements 6. Hierbei ist vorgesehen, dass ein Kopf 18 des Befestigungselements 6 einen größeren Durchmesser und somit ein größeres Außenmaß als ein Stift 20 des Befestigungselements 6 aufweist. Allerdings ist hier der Stift 20 in axialer Richtung, d. h. in Einführrichtung des Befestigungselements 6 in das Aufnahmemodul 4a, länger als der Kopf 18 des Befestigungselements 6. Das Verrastungsmodul 16 umfasst hier zwei Wulste 22a, 22b, die entlang der Innenwand 10 relativ zur Einführrichtung des Befestigungselements 6 zueinander koaxial versetzt angeordnet sind. Dabei weisen beide Wulste 22a, 22b einen minimalen Durchmesser bzw. Innendurchmesser und somit ein Innenmaß auf, der bzw. das geringer als der maximale Durchmesser bzw. Außendurchmesser des Kopfs 18 ist. Zwischen den beiden Wulsten 22a, 22b des Verrastungsmoduls 16 befindet sich eine Nut bzw. Sicke, wobei ein Nutgrund bzw. Nutboden die Innenwand 10 bildet und einen Innendurchmesser bzw. minimalen Durchmesser als Innenmaß aufweist, der bzw. das größer als der Außendurchmesser des Kopfs 18 ist. Außerdem ist eine axiale Länge des Nutgrunds größer als eine Höhe bzw. axiale Länge des Kopfs 18. Entsprechend ist ein axialer Abstand der beiden Wulste 22a, 22b größer als eine Höhe des Kopfs 18 des Befestigungselements 6. Außerdem ist hier vorgesehen, dass die zweite Öffnung 14 hier von einem Anlageelement 24 begrenzt ist.

Zum Bereitstellen der Verbindungsanordnung 2 wird zunächst das Befestigungselement 6 mit dem Stift 20 voran durch die erste Öffnung 12 in die von der Innenwand 10 umschlossene Kammer 8 eingeführt. Falls der Kopf 18 gegen die erste Wulst 22a mit einer Kraft gedrückt wird, deren Wert mindestens so groß wie ein hierfür vorgesehener Grenzwert ist, wird die erste Wulst 22a durch den Kopf 18 elastisch verformt. Dabei wird der Kopf 18 des Befestigungselements 6 zwischen den beiden Wulsten 22a, 22b des Verrastungsmoduls 16 eingeklemmt. Dabei wird das Befestigungselement 6 innerhalb der Kammer 8 vollständig und verliersicher aufgenommen.

Danach wird die Verbindungsanordnung 2 auf einer Vorrichtung 26 angeordnet und/oder aufgesetzt. Danach wird das Befestigungselement 6 durch die erste Öffnung 12 weiter in Richtung der Vorrichtung 26 gedrückt und dabei aus bzw. von dem Verrastungsmodul 16 entrastet, wenn der Kopf 18 mit einer Kraft gegen die zweite Wulst 22b gedrückt wird, deren Wert größer als der Grenzwert ist. Danach wird der Stift 20 durch die zweite Öffnung 14 in Richtung einer Öffnung 28 der Vorrichtung 26 gedrückt, wobei der Kopf 18 an dem Anlageelement 24 in Anlage gerät. Danach wird der Stift 20 in der Öffnung 28 angeordnet, in vorliegender Ausführungsform verschraubt, wobei die Vorrichtung 26 und die Verbindungsanordnung 2 über das Befestigungselement 6 miteinander verbunden werden. In Ausgestaltung weist der Stift 20 außenwandig ein Gewinde auf, das in ein Gegengewinde an einer Innenwand der Öffnung 28 in diese zu schrauben ist.

## Patentansprüche

1. Verbindungsanordnung mit mehreren Aufnahmemodulen (4a, 4b, 4c, 4d), wobei jedes Aufnahmemodul (4a, 4b, 4c, 4d) zur Aufnahme von jeweils einem Befestigungselement (6) ausgebildet ist, wobei jedes Aufnahmemodul (4a, 4b, 4c, 4d) eine Kammer (8) zur Aufnahme des jeweiligen Befestigungselements (6) umfasst, die von einer Innenwand (10) begrenzt ist und eine erste Öffnung (12) sowie eine zweite Öffnung (14) aufweist, wobei die beiden Öffnungen (12, 14) einen Durchgangskanal innerhalb der Kammer (8) begrenzen, wobei die Innenwand (10) mindestens ein Verrastungsmodul (16) aufweist, an dem das jeweilige Befestigungselement (6) nach einem Einführen des jeweiligen Befestigungselements (6) entlang einer Längsrichtung des Durchgangskanals durch die erste Öffnung (12) in die Kammer (8) innerhalb der Kammer (8) zumindest vorübergehend zu verrasten ist, wobei das verrastete jeweilige Befestigungselement (6) vollständig innerhalb der Kammer (8) aufzunehmen ist,
wobei die Aufnahmemodule (4a, 4b, 4c, 4d) der Verbindungsanordnung (2) aus Metall und elektrisch leitfähig sind, und wobei das jeweilige Befestigungselement (6) aus Metall und elektrisch leitfähig ist, wobei an der Verbindungsanordnung (2) mindestens eine als Batterie ausgebildete Vorrichtung (26) zu befestigen ist.

2. Verbindungsanordnung nach Anspruch 1, bei der jedes Aufnahmemodul (4a, 4b, 4c, 4d) dazu ausgebildet ist, jeweils ein Befestigungselement (6) aufzunehmen, das einen Stift (20) und einen Kopf (18) aufweist, die miteinander verbunden sind, wobei der Durchgangskanal in Einführrichtung des jeweiligen Befestigungselements (6) länger als der Kopf (18) und der Stift (20) ist.

3. Verbindungsanordnung nach Anspruch 2, bei der jedes Aufnahmemodul (4a, 4b, 4c, 4d) dazu ausgebildet ist, jeweils ein Befestigungselement (6) aufzunehmen, das als Schraube ausgebildet ist.

4. Verbindungsanordnung nach Anspruch 2 oder 3, bei der ein minimales Innenmaß der Innenwand (10) der Kammer (8) größer als ein maximales Außenmaß des Kopfs (18) des jeweiligen Befestigungselements (6) ist, wobei das mindestens eine Verrastungsmodul (16) einen Bereich innerhalb der Kammer (8) begrenzt, wobei ein minimales Innenmaß des von dem mindestens einen Verrastungsmodul (16) begrenzten Bereichs kleiner als das maximale Außenmaß des Kopfs (18) und größer als ein maximales Außenmaß des Stifts (20) ist.

5. Verbindungsanordnung nach Anspruch 4, bei der die Innenwand (10) der Kammer (8) jedes Aufnahmemoduls (4a, 4b, 4c, 4d) relativ zur Einführrichtung des jeweiligen Befestigungselements (6) rotationssymmetrisch ausgebildet ist, wobei das mindestens eine Verrastungsmodul (16) zwei Wulste (22a, 22b) aufweist, die an der Innenwand (10) in Einführrichtung des jeweiligen Befestigungselements (6) zueinander axial versetzt angeordnet sind.

6. Verbindungsanordnung nach Anspruch 4 oder 5, bei der ein Innenmaß einer ersten der beiden Öffnungen (12, 14) des Durchgangskanals größer als das Außenmaß des Kopfs (18) ist, und wobei ein Innenmaß einer zweiten der beiden Öffnungen (12, 14) des Durchgangskanals kleiner als das Außenmaß des Kopfs (18) ist.

7. Verbindungsanordnung nach Anspruch 6, bei der an der zweiten der beiden Öffnungen (12, 14) ein Anlageelement (24) angeordnet ist, das ein Loch mit einem Innenmaß aufweist, das kleiner als das Außenmaß des Kopfs (18) ist und die zweite Öffnung (12, 14) begrenzt.

8. Verbindungsanordnung nach einem der voranstehenden Ansprüche, bei der an einer Außenwand eine Isolierung angeordnet ist.

9. Verfahren zum Befestigen einer Verbindungsanordnung (2) an mindestens einer Vorrichtung (26), wobei die Verbindungsanordnung (2) mehrere Aufnahmemodule (4a, 4b, 4c, 4d) aufweist, wobei jedes Aufnahmemodul (4a, 4b, 4c, 4d) zur Aufnahme jeweils eines Befestigungselements (6) ausgebildet ist, wobei jedes Aufnahmemodul (4a, 4b, 4c, 4d) eine Kammer (8) zur Aufnahme des jeweiligen Befestigungselements (6) umfasst, die von einer Innenwand (10) begrenzt ist und eine erste Öffnung (12) sowie eine zweite Öffnung (14) aufweist, wobei die beiden Öffnungen (12, 14) einen Durchgangskanal innerhalb der Kammer (8) begrenzen, wobei die Kammer (8) von einer Innenwand (10) umschlossen ist, die mindestens ein Verrastungsmodul (16) aufweist, wobei das jeweilige Befestigungselement (6) nach einem Einführen des jeweiligen Befestigungselements (6) entlang einer Längsrichtung des Durchgangskanals durch die erste Öffnung (12) in die Kammer (8) innerhalb der Kammer (8) zumindest vorübergehend verrastet wird, wobei das verrastete jeweilige Befestigungselement (6) vollständig innerhalb der Kammer (8) aufgenommen wird, wobei die Verbindungsanordnung (2) an der mindestens einen Vorrichtung (26) angeordnet wird, wobei das jeweilige Befestigungselement (6) durch die erste Öffnung (12) hindurch in Richtung der zweiten Öffnung (14) zumindest zum Teil aus der Kammer (8) des jeweiligen Aufnahmemoduls (4a, 4b, 4c, 4d) gedrückt und dadurch an der mindestens einen Vorrichtung (26) befestigt wird, wobei die Aufnahmemodule (4a, 4b, 4c, 4d) der Verbindungsanordnung (2) aus Metall und elektrisch leitfähig sind, und wobei das jeweilige Befestigungselement (6) aus Metall und elektrisch leitfähig ist, wobei an der Verbindungsanordnung (2) mindestens eine als Batterie ausgebildete Vorrichtung (26) zu befestigen ist.

10. Verfahren nach Anspruch 9, bei dem jeweils ein Befestigungselement (6) verwendet wird, das einen Kopf (18) und einen Stift (20) aufweist, wobei ein maximales Außenmaß des Kopfs (18) größer als ein maximales Außenmaß des Stifts (20) ist, wobei die erste Öffnung (12) des Durchgangskanals ein Innenmaß aufweist, das größer als ein Außenmaß des Kopfs (18) ist, und wobei die zweite Öffnung (14) des Durchgangskanals ein Innenmaß aufweist, das kleiner als das Außenmaß des Kopfs (18) ist, wobei das jeweilige Befestigungselement (6) mit dem Stift (20) voran in die erste Öffnung (12) eingeführt wird, wobei der Kopf (18) durch die erste Öffnung (12) hindurch in der Kammer (8) angeordnet und über das mindestens eine Verrastungsmodul (16) verrastet wird, wobei die Verbindungsanordnung (2) an der mindestens einen Vorrichtung (26) angeordnet wird, wobei der Kopf (18) durch die erste Öffnung (12) in Richtung der zweiten Öffnung (14) geschoben und von dem mindestens einen Verrastungsmodul (16) entrastet wird, wobei der Stift (20) durch die zweite Öffnung (14) hindurch zumindest zum Teil in die mindestens eine Vorrichtung (26) eingeführt und dadurch mit der mindestens einen Vorrichtung (26) verbunden wird, wobei der Kopf (18) an der zweiten Öffnung (14) innerhalb der Kammer (8) in Anlage gerät und in der Kammer (8) verbleibt, wobei die Verbindungsanordnung (2) über das jeweilige Befestigungselement (6) an der mindestens einen Vorrichtung (26) befestigt wird.

## Claims

1. Connection assembly having a plurality of receiving modules (4a, 4b, 4c, 4d), wherein each receiving module (4a, 4b, 4c, 4d) is configured for the reception of respectively one fastening element (6), wherein each receiving module (4a, 4b, 4c, 4d) comprises a chamber (8) for the reception of the respective fastening element (6) which is delimited by an inner wall (10) and has a first opening (12) and a second opening (14), wherein the two openings (12, 14) delimit a through duct within the chamber (8), wherein the inner wall (10) has at least one latching module (16) on which the respective fastening element (6) is at least temporarily to be latched within the chamber (8) after an introduction of the respective fastening element (6) along a longitudinal direction of the through duct through the first opening (12) into the chamber (8), wherein the latched respective fastening element (6) is to be received completely within the chamber (8), wherein the receiving modules (4a, 4b, 4c, 4d) of the connection assembly (2) are made of metal and are electrically conductive, and wherein the respective fastening element (6) is made of metal and is electrically conductive, wherein at least one device (26) in the form of the battery is to be fastened on the connection assembly (2).

2. Connection assembly according to claim 1, in which each receiving module (4a, 4b, 4c, 4d) is configured respectively to receive a fastening element (6) which has a pin (20) and a head (18) which are interconnected, wherein in introduction direction of the respective fastening element (6) the through duct is longer than the head (18) and the pin (20).

3. Connection assembly according to claim 2, in which each receiving module (4a, 4b, 4c, 4d) is configured to receive in each case a fastening element (6) which is in the form of a screw.

4. Connection assembly according to claim 2 or 3, in which a minimum inner dimension of the inner wall (10) of the chamber (8) is greater than a maximum outer dimension of the head (18) of the respective fastening element (6), wherein the at least one latching module (16) delimits a region within the chamber (8), wherein a minimum inner dimension of the region delimited by the at least one latching module (16) is smaller than the maximum outer dimension of the head (18) and greater than a maximum outer dimension of the pin (20).

5. Connection assembly according to claim 4, in which the inner wall (10) of the chamber (8) of each receiving module (4a, 4b, 4c, 4d) is designed so as to be rotationally symmetrical relative to the insertion direction of the respective fastening element (6), wherein the at least one latching module (16) has two beads (22a, 22b) which are arranged at the inner wall (10) offset axially to one another in insertion direction of the respective fastening element (6).

6. Connection assembly according to claim 4 or 5, in which an inner dimension of a first of the two openings (12, 14) of the through duct is greater than the outer dimension of the head (18), and wherein an inner dimension of a second of the two openings (12, 14) of the through duct is smaller than the outer dimension of the head (18).

7. Connection assembly according to claim 6, in which at the second of the two openings (12, 14) is arranged a bearing element (24) which has a hole with an inner dimension which is smaller than the outer dimension of the head (18) and delimits the second opening (12, 14).

8. Connection assembly according to any of the preceding claims, in which an insulation is arranged on an outer wall.

9. Method for fastening a connection assembly (2) on at least one device (26), wherein the connection assembly (2) has a plurality of receiving modules (4a, 4b, 4c, 4d), wherein each receiving module (4a, 4b, 4c, 4d) is designed for the reception of respectively one fastening element (6), wherein each receiving module (4a, 4b, 4c, 4d) has one chamber (8) for the reception of the respective fastening element (6), which chamber is delimited by an inner wall (10) and has a first opening (12) and a second opening (14), wherein the two openings (12, 14) delimit a through duct within the chamber (8), wherein the chamber (8) is enclosed by an inner wall (10) which has at least one latching module (16), wherein the respective fastening element (6) is latched within the chamber (8) at least temporarily after an introduction of the respective fastening element (6) along a longitudinal direction of the through duct through the first opening (12) into the chamber (8), wherein the latched respective fastening element (6) is received completely within the chamber (8), wherein the connection assembly (2) is arranged on the at least one device (26), wherein the respective fastening element (6) is pressed through the first opening (12) in the direction of the second opening (14) at least in part out of the chamber (8) of the respective receiving module (4a, 4b, 4c, 4d) and thereby is fastened to the at least one device (26), wherein the receiving modules (4a, 4b, 4c, 4d) of the connection assembly (2) are made of metal and are electrically conductive, and wherein the respective fastening element (6) is made of metal and is electrically conductive, wherein at least one device (26) in the form of a battery is to be fastened to the connection assembly (2).

10. Method according to claim 9, in which in each case one fastening element (6) is used which has a head (18) and a pin (20), wherein a maximum outer dimension of the head (18) is greater than a maximum outer dimension of the pin (20), wherein the first opening (12) of the through duct has an inner dimension which is greater than an outer dimension of the head (18), and wherein the second opening (14) of the through duct has an inner dimension which is smaller than the outer dimension of the head (18), wherein the respective fastening element (6) is inserted pin (20) first into the first opening (12), wherein the head (18) is arranged through the first opening (12) in the chamber (8) and is latched via the at least one latching module (16), wherein the connection assembly (2) is arranged on the at least one device (26), wherein the head (18) is pushed through the first opening (12) in the direction of the second opening (14) and is unlatched from the at least one latching module (16), wherein the pin (20) is guided through the second opening (14) at least partially into the at least one device (26) and thereby is connected with the at least one device (26), wherein the head (18) comes to rest at the second opening (14) within the chamber (8) and remains in the chamber (8), wherein the connection assembly (2) is fastened on the at least one device (26) via the respective fastening element (6).

## Revendications

1. Agencement de liaison avec plusieurs modules de réception (4a, 4b, 4c, 4d), dans lequel chaque module de réception (4a, 4b, 4c, 4d) est réalisé pour la réception de respectivement un élément de fixation (6), dans lequel chaque module de réception (4a, 4b, 4c, 4d) comporte une chambre (8) pour la réception de l'élément de fixation (6) respectif qui est délimité par une paroi intérieure (10) et présente une première ouverture (12) ainsi qu'une seconde ouverture (14), dans lequel les deux ouvertures (12, 14) délimitent un canal de passage à l'intérieur de la chambre (8), dans lequel la paroi intérieure (10) présente au moins un module d'encliquetage (16), au niveau duquel l'élément de fixation (6) respectif est à encliqueter au moins temporairement après une introduction de l'élément de fixation (6) respectif le long d'un sens longitudinal du canal de passage par la première ouverture (12) dans la chambre (8) à l'intérieur de la chambre (8), dans lequel l'élément de fixation (6) respectif encliqueté est à recevoir complètement à l'intérieur de la chambre (8),
dans lequel les modules de réception (4a, 4b, 4c, 4d) de l'agencement de liaison (2) sont en métal et électroconducteurs, et dans lequel l'élément de fixation (6) respectif est en métal et électroconducteur, dans lequel au moins un dispositif (26) réalisé comme batterie est à fixer à l'agencement de liaison (2).

2. Agencement de liaison selon la revendication 1, pour lequel chaque module de réception (4a, 4b, 4c, 4d) est réalisé afin de recevoir respectivement un élément de fixation (6) qui présente une tige (20) et une tête (18) qui sont reliées entre elles, dans lequel le canal de passage dans le sens d'introduction de l'élément de fixation (6) respectif est plus long que la tête (18) et la tige (20).

3. Agencement de liaison selon la revendication 2, pour lequel chaque module de réception (4a, 4b, 4c, 4d) est réalisé afin de recevoir respectivement un élément de fixation (6) qui est réalisé comme vis.

4. Agencement de liaison selon la revendication 2 ou 3, pour lequel une dimension intérieure minimale de la paroi intérieure (10) de la chambre (8) est supérieure à une dimension extérieure maximale de la tête (18) de l'élément de fixation (6) respectif, dans lequel l'au moins un module d'encliquetage (16) délimite une zone à l'intérieur de la chambre (8), dans lequel une dimension intérieure minimale de la zone délimitée par l'au moins un module d'encliquetage (16) est inférieure à la dimension extérieure maximale de la tête (18) et supérieure à une dimension extérieure maximale de la tige (20).

5. Agencement de liaison selon la revendication 4, pour lequel la paroi intérieure (10) de la chambre (8) de chaque module de réception (4a, 4b, 4c, 4d) est réalisée de manière symétrique en rotation par rapport au sens d'introduction de l'élément de fixation (6) respectif, dans lequel l'au moins un module d'encliquetage (16) présente deux bourrelets (22a, 22b) qui sont agencés en déport axialement l'un de l'autre au niveau de la paroi intérieure (10) dans le sens d'introduction de l'élément de fixation (6) respectif.

6. Agencement de liaison selon la revendication 4 ou 5, pour lequel une dimension intérieure d'une première des deux ouvertures (12, 14) du canal de passage est supérieure à la dimension extérieure de la tête (18), et dans lequel une dimension intérieure d'une seconde des deux ouvertures (12, 14) du canal de passage est inférieure à la dimension extérieure de la tête (18).

7. Agencement de liaison selon la revendication 6, pour lequel un élément d'appui (24) est agencé au niveau de la seconde des deux ouvertures (12, 14), qui présente un trou avec une dimension intérieure qui est inférieure à la dimension extérieure de la tête (18) et délimite la seconde ouverture (12, 14).

8. Agencement de liaison selon l'une des revendications précédentes, pour lequel une isolation est agencée au niveau d'une paroi extérieure.

9. Procédé de fixation d'un agencement de liaison (2) à au moins un dispositif (26), dans lequel l'agencement de liaison (2) présente plusieurs modules de réception (4a, 4b, 4c, 4d), dans lequel chaque module de réception (4a, 4b, 4c, 4d) est réalisé pour la réception respectivement d'un élément de fixation (6), dans lequel chaque module de réception (4a, 4b, 4c, 4d) comporte une chambre (8) pour la réception de l'élément de fixation (6) respectif qui est délimité par une paroi intérieure (10) et présente une première ouverture (12) ainsi qu'une seconde ouverture (14), dans lequel les deux ouvertures (12, 14) délimitent un canal de passage dans la chambre (8), dans lequel la chambre (8) est entourée par une paroi intérieure (10) qui présente au moins un module d'encliquetage (16), dans lequel l'élément de fixation (6) respectif est encliqueté au moins temporairement après une introduction de l'élément de fixation (6) respectif le long d'un sens longitudinal du canal de passage par la première ouverture (12) dans la chambre (8) à l'intérieur de la chambre (8), dans lequel l'élément de fixation (6) respectif encliqueté est reçu complètement à l'intérieur de la chambre (8), dans lequel l'agencement de liaison (2) est agencé au niveau de l'au moins un dispositif (26), dans lequel l'élément de fixation (6) respectif est pressé par la première ouverture (12) en direction de la seconde ouverture (14) au moins en partie de la chambre (8) du module de réception (4a, 4b, 4c, 4d) respectif et est fixé ainsi au niveau de l'au moins un dispositif (26),
dans lequel les modules de réception (4a, 4b, 4c, 4d) de l'agencement de liaison (2) sont en métal et électroconducteurs, et dans lequel l'élément de fixation (6) respectif est en métal et électroconducteur, dans lequel au moins un dispositif (26) réalisé comme batterie est à fixer au niveau de l'agencement de liaison (2).

10. Procédé selon la revendication 9, pour lequel respectivement un élément de fixation (6) est utilisé, lequel présente une tête (18) et une tige (20), dans lequel une dimension extérieure maximale de la tête (18) est supérieure à une dimension extérieure maximale de la tige (20), dans lequel la première ouverture (12) du canal de passage présente une dimension intérieure qui est supérieure à une dimension extérieure de la tête (18), et dans lequel la seconde ouverture (14) du canal de passage présente une dimension intérieure qui est inférieure à la dimension extérieure de la tête (18), dans lequel l'élément de fixation (6) respectif est introduit avec la tige (20) en avant dans la première ouverture (12), dans lequel la tête (18) est agencée par la première ouverture (12) dans la chambre (8) et est encliquetée par le biais de l'au moins un module d'encliquetage (16), dans lequel l'agencement de liaison (2) est agencé au niveau de l'au moins un dispositif (26), dans lequel la tête (18) est poussée par la première ouverture (12) en direction de la seconde ouverture (14) et est désencliquetée par l'au moins un module d'encliquetage (16), dans lequel la tige (20) est introduite par la seconde ouverture (14) au moins en partie dans l'au moins un dispositif (26) et est reliée ainsi à l'au moins un dispositif (26), dans lequel la tête (18) parvient en appui contre la seconde ouverture (14) à l'intérieur de la chambre (8) et reste dans la chambre (8), dans lequel l'agencement de liaison (2) est fixé par le biais de l'élément de fixation (6) respectif à l'au moins un dispositif (26).
